(19) Europäisches Patentamt
European Patent Office
Office européen des brevets

(11) EP 4 456 183 A1

(12) EUROPEAN PATENT APPLICATION
published in accordance with Art. 153(4) EPC

(43) Date of publication:
**30.10.2024 Bulletin 2024/44**

(21) Application number: **21969403.1**

(22) Date of filing: **29.12.2021**

(51) International Patent Classification (IPC):
***H01M 4/36*** *(2006.01)* ***H01M 10/0525*** *(2010.01)*

(52) Cooperative Patent Classification (CPC):
Y02E 60/10

(86) International application number:
**PCT/CN2021/142398**

(87) International publication number:
**WO 2023/123028 (06.07.2023 Gazette 2023/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Zhangwan Town, Jiaocheng District**
**Ningde City**
**Fujian 352100 (CN)**

(72) Inventor: **WANG, Kefei**
**Ningde City, Fujian 352100 (CN)**

(74) Representative: **Icosa**
**83 avenue Denfert-Rochereau**
**75014 Paris (FR)**

# (54) ELECTROCHEMICAL DEVICE AND ELECTRONIC DEVICE

(57) This application relates to an electrochemical apparatus and an electronic apparatus. Specifically, this application provides an electrochemical apparatus including a positive electrode, a negative electrode, and an electrolyte, where the positive electrode includes a positive electrode current collector and a positive electrode active material layer formed on the positive electrode current collector. The positive electrode active material layer includes a positive electrode active material, where the positive electrode active material includes element tungsten. The electrolyte includes fluoroethylene carbonate. The electrochemical apparatus according to this application features improved low-temperature rate performance and high-temperature and high-pressure safety.

EP 4 456 183 A1

## Description

### TECHNICAL FIELD

This application relates to the field of energy storage, specifically to an electrochemical apparatus and an electronic apparatus, and in particular to a lithium-ion battery.

### BACKGROUND

With the development of technologies and the increasing demand for mobile apparatuses, demands for electrochemical apparatuses (for example, lithium-ion batteries) under different usage conditions have increased significantly, and thus higher requirements are imposed on performance of lithium-ion batteries, as reflected in: high capacity, appropriate cycle life, good high-temperature performance, good low-temperature performance, good high-rate discharge performance, overcharge resistance, safety, and the like.

Because a potential difference between positive electrode and negative electrode active materials used in lithium-ion batteries is generally above 2V, only organic solvent electrolyte systems with wider electrochemical window can be selected. However, these lithium-ion batteries are not suitable for extreme working conditions (for example, low temperature) and pose potential safety hazards.

In view of this, it is necessary to provide an electrochemical apparatus and electronic apparatus with improved low-temperature performance and safety.

### SUMMARY

Some embodiments of this application solve the problems existing in the prior art to some extent by providing an electrochemical apparatus and electronic apparatus with improved low-temperature performance and safety.

According to one aspect of this application, this application provides an electrochemical apparatus including a positive electrode, a negative electrode, and an electrolyte, where the positive electrode includes a positive electrode current collector and a positive electrode active material layer formed on the positive electrode current collector, and the positive electrode active material layer includes a positive electrode active material, where the positive electrode active material includes element tungsten, and the electrolyte includes fluoroethylene carbonate.

According to an embodiment of this application, based on a mass of the positive electrode active material, a percentage of element tungsten is x%; based on a mass of the electrolyte, a percentage of the fluoroethylene carbonate is a%; and x and a satisfy: $1 \le a/x \le 70$.

According to an embodiment of this application, based on a mass of the positive electrode active material, a percentage of element tungsten is x%, and $0.05 \le x \le 1$.

According to an embodiment of this application, based on a mass of the electrolyte, a percentage of the fluoroethylene carbonate is a%, and $0.1 \le a \le 7$.

According to an embodiment of this application, the electrolyte further includes a sulfur-oxygen double bond-containing compound, and based on a mass of the electrolyte, a mass percentage of the sulfur-oxygen double bond-containing compound is b%, and $0.01 \le b \le 5$.

According to the embodiment of this application, based on a mass of the positive electrode active material, a percentage of element tungsten is x%, and b and x satisfy: $1 \le b/x \le 50$.

According to an embodiment of this application, the positive electrode further includes an insulating layer, and the insulating layer is formed on the positive electrode current collector and overlaps with the positive electrode active material layer in some regions of the insulating layer, or the insulating layer is formed on the positive electrode current collector and does not overlap with the positive electrode active material layer.

According to the embodiment of this application, the insulating layer includes a compound containing element aluminum, and based on a mass of the insulating layer, a mass percentage of element aluminum is yi%; based on a mass of the positive electrode active material, a percentage of element tungsten is x%; and $y_1$ and x satisfy: $50 \le y_1/x \le 650$.

According to the embodiment of this application, a value range of $y_1$ is from 30 to 65.

According to an embodiment of this application, the positive electrode further includes a primer layer, and the primer layer is formed between the positive electrode current collector and the positive electrode active material layer.

According to the embodiment of this application, the primer layer includes element aluminum, and based on a mass of the primer layer, a mass percentage of element aluminum is $y_2$%; based on a mass of the positive electrode active material, a percentage of element tungsten is x%; and $y_2$ and x satisfy: $20 \le y_2/x \le 550$.

According to the embodiment of this application, a value range of $y_2$ is from 20 to 50.

According to an embodiment of this application, the electrolyte further includes at least one of succinonitrile, adiponitrile, ethylene glycol di(2-cyanoethyl) ether, 1,3,6-hexanetrinitrile, 1,2,3-tris(2-cyanoethoxy)propane, 1,3-propanesultone, ethylene sulfate, vinylene carbonate, or 1-propyl phosphoric acid cyclic anhydride.

According to an embodiment of this application, the positive electrode active material includes lithium nickel cobalt manganate.

According to another aspect of this application, this application provides an electronic apparatus including the electrochemical apparatus according to this application.

The positive electrode active material containing tungsten used in this application has high lattice stability and can significantly improve the safety of the electrochemical apparatus under high temperature and high pressure. In conjunction with the use of an electrolyte including fluoroethylene carbonate, the low-temperature rate performance of the electrochemical apparatus can be significantly improved.

Additional aspects and advantages of some embodiments of this application are partly described and presented in subsequent descriptions, or explained by implementation of these embodiments of this application.

## DESCRIPTION OF EMBODIMENTS

Some embodiments of this application are described in detail below. Some embodiments of this application should not be construed as limitations on this application.

Unless otherwise expressly indicated, the following terms used in this specification have the meanings described below.

In the specific embodiments and claims, a list of items connected by the term "at least one of" may mean any combination of the listed items. For example, if items A and B are listed, the phrase "at least one of A and B" means only A; only B; or A and B. In another instance, if items A, B, and C are listed, the phrase "at least one of A, B, or C" means only A; only B; only C; A and B (exclusive of C); A and C (exclusive of B); B and C (exclusive of A); or all of A, B, and C. The item A may contain a single element or a plurality of elements. The item B may contain a single element or a plurality of elements. The item C may contain a single element or a plurality of elements. The term "at least one type of" has the same meaning as the term "at least one of".

Organic solvent electrolyte systems used in conventional electrochemical apparatuses (for example, lithium-ion batteries) are prone to burning under extreme working conditions (for example, overcharge, over-discharge, or overcooling), posing serious safety hazards. In addition, negative electrode active materials of lithium-ion batteries are usually graphite materials, silicon-carbon composite materials, or silicon monoxide materials, and these materials have poor kinetic performance under low-temperature or high-rate working conditions, leading to serious performance degradation of lithium-ion batteries. In addition, conventional lithium-ion batteries have poor low-temperature discharge performance, and have seriously degraded performance and even cannot be discharged below -10°C. The conventional lithium-ion batteries also have poor high rate performance. When continuously discharged at a 5C rate, they may experience a high temperature rise due to untimely heat dissipation, posing a risk of thermal runaway. In addition, misuse of user terminals may also cause overcharge of lithium-ion batteries, leading to safety accidents such as fire and explosion.

Adding additives such as aromatic compounds like fluorobenzene and biphenyl to the electrolyte is one of the means to address the safety problem of lithium-ion batteries. However, these additives not only increase the battery impedance, but also degrade low-temperature performance. Providing inorganic coatings on the surface of an electrode plate can also improve the safety but still lead to a loss of energy density or a degradation of low-temperature performance. In the industry, element tungsten has been added to positive electrode materials with the purpose of changing the surface energy of the microstructure of a material, significantly enhancing the cycling stability of the material. However, there have been no reports showing that the safety is improved by adding element tungsten to a positive electrode material. In addition, it is generally believed that the use of fluoroethylene carbonate in the electrolyte is for the film formation on the negative electrode to reduce side reactions between the negative electrode and the electrolyte. Based on existing knowledge, it is impossible to predict the impact on the low-temperature rate and safety performance of an electrochemical apparatus by using a positive electrode active material containing element tungsten and an electrolyte including fluoroethylene carbonate.

This application addresses issues related to the low-temperature rate and safety performance of an electrochemical apparatus by using a positive electrode active material containing element tungsten and an electrolyte including fluoroethylene carbonate. Doping element tungsten in the positive electrode active material can effectively suppress lattice distortion and improve lattice stability, thereby suppressing the volume change of particles during charge-discharge cycles under high or low temperature conditions so as to reduce particle cracking and breakage and improve interface stability. The use of an electrolyte including fluoroethylene carbonate can significantly reduce the ionic resistance and electronic resistance on the surface of the positive electrode active material. The specific combination of the positive electrode active material and the electrolyte in this application can not only effectively improve the low-temperature rate performance of the electrochemical apparatuses, but also significantly improve the safety of the electrochemical apparatuses (for example, short-circuit safety and thermal abuse safety).

## I. Positive electrode

The positive electrode includes a positive electrode current collector and a positive electrode active material layer formed on the positive electrode current collector. The positive electrode active material layer may be one layer or a plurality of layers. The positive electrode active material layer includes positive electrode active materials, and each of the plurality of the positive electrode active material layers may contain the same or different positive electrode active materials.

One main feature of the electrochemical apparatus according to this application is that the positive electrode active material includes element tungsten.

In some embodiments, based on a mass of the positive electrode active material, a percentage of element tungsten is x%, and $0.05 \leq x \leq 1$. In some embodiments, $0.01 \leq x \leq 0.5$. In some embodiments, x is 0.05, 0.1, 0.2, 0.3, 0.4, 0.5, 0.6, 0.7, 0.8, 0.9, 1, or within a range defined by any two of the foregoing values. When the percentage of element tungsten in the positive electrode active material is within the foregoing range, the low-temperature rate performance and high-temperature and high-pressure safety of the electrochemical apparatus can be further improved.

In some embodiments, the positive electrode further includes an insulating layer, and the insulating layer is formed on the positive electrode current collector and overlaps with the positive electrode active material layer in some regions of the insulating layer, or the insulating layer is formed on the positive electrode current collector and does not overlap with the positive electrode active material layer.

In some embodiments, the insulating layer includes a compound containing element aluminum. In some embodiments, the compound containing element aluminum includes ceramic aluminum oxide. When the insulating layer includes the compound containing element aluminum, the low-temperature rate performance and high-temperature and high-pressure safety of the electrochemical apparatus can be further improved.

In some embodiments, based on a mass of the insulating layer, a mass percentage of element aluminum is $y_1$%, and $y_1$ and x satisfy: $50 \leq y_1/x \leq 650$. In some embodiments, $60 \leq y_1/x \leq 600$. In some embodiments, $100 \leq y_1/x \leq 500$. In some embodiments, $200 \leq y_1/x \leq 400$. In some embodiments, yi/x is 50, 60, 70, 80, 90, 100, 150, 200, 250, 300, 350, 400, 450, 500, 550, 600, 650, or falls within a range defined by any two of the foregoing values. When the mass percentage of element aluminum in the insulating layer and the percentage of element tungsten in the positive electrode active material satisfy the foregoing relationship, this can reduce defects on the surface of the crystal structure of the positive electrode active material, effectively suppress continuous destruction of the surface passivation layer of the positive electrode active material during charge-discharge cycles of the electrochemical apparatus, and reduce the number of repairs, so that the interface stability of the positive electrode active material layer can be fully improved, thereby further improving the low-temperature rate performance and high-temperature and high-pressure safety of the electrochemical apparatus.

In some embodiments, a value range of $y_1$ is from 30 to 65. In some embodiments, a value range of $y_1$ is from 40 to 60. In some embodiments, $y_1$ is 30, 35, 40, 45, 50, 55, 60, 65, or within a range defined by any two of the foregoing values. When the mass percentage of element aluminum in the insulating layer is within the foregoing range, the low-temperature rate performance and high-temperature and high-pressure safety of the electrochemical apparatus can be further improved.

In some embodiments, the positive electrode further includes a primer layer, and the primer layer is formed between the positive electrode current collector and the positive electrode active material layer.

In some embodiments, the primer layer includes element aluminum. In some embodiment, the primer layer includes ceramic aluminum oxide. When the primer layer includes the compound containing element aluminum, the low-temperature rate performance and high-temperature and high-pressure safety of the electrochemical apparatus can be further improved.

In some embodiments, based on a mass of the primer layer, a mass percentage of element aluminum is $y_2$%, and $y_2$ and x satisfy: $20 \leq y_2/x \leq 550$. In some embodiments, $50 \leq y_2/x \leq 500$. In some embodiments, $100 \leq y_2/x \leq 400$. In some embodiments, $200 \leq y_2/x \leq 400$. In some embodiments, $y_2/x$ is 20, 30, 40, 50, 100, 150, 200, 250, 300, 350, 400, 450, 500, 550, or falls within a range defined by any two of the foregoing values. When the mass percentage of element aluminum in the primer layer and the percentage of element tungsten in the positive electrode active material satisfy the foregoing relationship, this can effectively suppress the interface stability of the positive electrode interface during charge-discharge cycles of the electrochemical apparatus, thereby further improving the low-temperature rate performance and high-temperature and high-pressure safety of the electrochemical apparatus.

In some embodiments, a value range of $y_2$ is from 20 to 50. In some embodiments, a value range of $y_2$ is from 20 to 35. In some embodiments, $y_2$ is 20, 25, 30, 35, 40, 45, 50, or within a range defined by any two of the foregoing values. When the mass percentage of element aluminum in the primer layer is within the foregoing range, the low-temperature rate performance and high-temperature and high-pressure safety of the electrochemical apparatus can be further improved.

In some embodiments, the positive electrode active material includes lithium cobalt oxide. In some embodiments, the positive electrode active material includes lithium nickel cobalt manganate. As compared with lithium cobalt oxide, a crystal structure of lithium nickel cobalt manganate is more stable when doped with element tungsten, with a more

significant improvement in the low-temperature rate performance and high-temperature and high-pressure safety of the electrochemical apparatus.

In some embodiments, a material with a composition different from that of the positive electrode active material may be attached to a surface of the positive electrode active material. Instances of the attached material may include but are not limited to: oxides such as aluminum oxide, silicon dioxide, titanium dioxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon. The material being attached to the surface of the positive electrode active material can suppress oxidation reaction of an electrolyte on the surface of the positive electrode active material and prolong service life of the electrochemical apparatus. When the amount of the material attached to the surface is too small, the effect cannot be fully exerted. When the amount of the material attached to the surface is too large, deintercalation and intercalation of lithium ions are hindered, and thus resistance sometimes increases. In this application, the material attached to the surface of the positive electrode active material and having the composition different from that of the positive electrode active material is also referred to as a "positive electrode active material".

In some embodiments, shapes of positive electrode active material particles include but are not limited to block, polyhedron, sphere, ellipsoid, plate, needle, and column. In some embodiments, the positive electrode active material particles include primary particles, secondary particles, or a combination thereof. In some embodiments, the primary particles may agglomerate to form the secondary particles.

The positive electrode conductive materials are not limited in type, and any known conductive material may be used. Instances of the positive electrode conductive material may include but are not limited to: graphite such as natural graphite and artificial graphite, carbon black such as acetylene black, carbon materials including amorphous carbon such as needle coke, carbon nanotubes, and graphene. The positive electrode conductive materials may be used alone or in any combination.

A positive electrode binder used in the manufacture of the positive electrode active material layer is not particularly limited in type. In a case of a coating method, any material capable of being dissolved or dispersed in a liquid medium used in the manufacture of electrodes can be used. Instances of the positive electrode binder may include but are not limited to one or more of the following: a resin-based polymer such as polyethylene, polypropylene, polyethylene terephthalate, polymethyl methacrylate, polyimide, aromatic polyamide, cellulose, and cellulose nitrate; a rubber-like polymer such as styrene-butadiene rubber (SBR), nitrile rubber (NBR), fluorine rubber, isoprene rubber, polybutadiene rubber, and ethylene-propylene rubber; a thermoplastic elastomer polymer such as a styrene butadiene styrene block copolymer or its hydride, an ethylene propylene diene terpolymer (EPDM), a styrene ethylene butadiene ethylene copolymer, and a styrene isoprene styrene block copolymer or its hydride; a soft resinous polymer such as syndiotactic-1,2-polybutadiene, polyvinyl acetate, an ethylene vinyl acetate copolymer, and a propylene-$\alpha$-olefin copolymer; a fluorine-based polymer such as polyvinylidene fluoride (PVDF), polytetrafluoroethylene, fluorinated polyvinylidene fluoride, and polytetrafluoroethylene-ethylene copolymer; and a polymer composition with ionic conductivity of alkali metal ions (especially lithium ions). The foregoing positive electrode binders may be used alone or in any combination.

Solvents used for forming a positive electrode slurry are not limited in type, provided that the solvent is capable of dissolving or dispersing the positive electrode active material, the conductive material, a positive electrode binder, and a thickener used as appropriate to needs. Instances of the solvent used for forming the positive electrode slurry may include any one of an aqueous solvent or an organic solvent. Instances of an aqueous medium may include but are not limited to water and a mixed medium of alcohols and water. Instances of an organic medium may include but are not limited to: aliphatic hydrocarbons such as hexane; aromatic hydrocarbons such as benzene, toluene, xylene, and methylnaphthalene; heterocyclic compounds such as quinoline and pyridine; ketones such as acetone, methyl ethyl ketone, and cyclohexanone; esters such as methyl acetate and methyl acrylate; amines such as diethylenetriamine and N,N-dimethylaminopropylamine; ethers such as diethyl ether, propylene oxide, and tetrahydrofuran (THF); amides such as N-methylpyrrolidone (NMP), dimethylformamide, and dimethylacetamide; and aprotic polar solvents such as hexamethylphosphoramide and dimethyl sulfoxide.

The thickener is typically used to adjust the viscosity of the slurry. In a case that the aqueous medium is used, the thickener and a styrene-butadiene rubber (SBR) emulsion can be used for slurrying. The thickener is not particularly limited in type. Instances of the thickener may include but are not limited to carboxymethyl cellulose, methyl cellulose, hydroxymethyl cellulose, ethyl cellulose, polyvinyl alcohol, oxidized starch, phosphorylated starch, casein, and salts thereof. The foregoing thickeners may be used alone or in any combination.

The positive electrode current collector is not particularly limited in type and may be any known material suitable for serving as a positive electrode current collector. Instances of the positive electrode current collector may include but are not limited to: metal materials such as aluminum, stainless steel, nickel coating, titanium, and tantalum; and carbon materials such as carbon cloth and carbon paper. In some embodiments, the positive electrode current collector is made of a metal material. In some embodiments, the positive electrode current collector is made of aluminum.

To reduce electronic contact resistance of the positive electrode current collector and the positive electrode active material layer, a conductive additive may be included in the surface of the positive electrode current collector. Instances of the conductive additive may include but are not limited to carbon and precious metals such as gold, platinum, and silver.

The positive electrode may be prepared by forming the positive electrode active material layer containing the positive electrode active material and the binder on the current collector. The positive electrode using the positive electrode active material can be prepared in a conventional method as follows: The positive electrode active material, the binder, and the conductive material and the thickener used as appropriate to needs are subjected to dry mixing to prepare a sheet, and then the obtained sheet is pressed onto the positive electrode current collector; or these materials are dissolved or dispersed in a liquid medium to prepare a slurry, and then the obtained slurry is applied onto the positive electrode current collector and drying is performed to form the positive electrode active material layer on the current collector. In this way, the positive electrode can be obtained.

In some embodiments, a mass percentage of the positive electrode active material in the positive electrode active material layer is 95%, preferably 96%, and further preferably 97%. In some embodiments, the mass percentage of the positive electrode active material in the positive electrode active material layer is 98%. In some embodiments, the mass percentage of the positive electrode active material in the positive electrode active material layer is 99%. When the mass percentage of the positive electrode active material in the positive electrode active material layer is within the foregoing range, this can significantly increase the energy density of the electrochemical apparatus.

When the positive electrode active material is primary particles, an average particle size of the positive electrode active material refers to a primary particle size of the positive electrode active material particles. When the primary particles of the positive electrode active material particles aggregate to form secondary particles, an average particle size of the positive electrode active material particles refers to a secondary particle size of the positive electrode active material particles.

In some embodiments, the average particle size of the positive electrode active material is D μm, with a value range of D from 5 to 30. In some embodiments, the value range of D is from 10 to 25. In some embodiments, the value range of D is from 12 to 20. In some embodiments, D is 5, 7, 9, 10, 12, 15, 18, 20, 25, 30, or within a range defined by any two of the foregoing values.

When the average particle size of the positive electrode active material is within the foregoing range, the positive electrode active material with high tap density can be obtained, the degradation of the performance of the electrochemical apparatus can be suppressed, and problems such as generation of stripes in the preparation process of positive electrodes for electrochemical apparatuses can be prevented (that is, when the positive electrode active material, the conductive material, and the binder are slurried with a solvent and applied as a thin film). Mixing more than two kinds of positive electrode active materials with different average particle sizes can further improve fillibility in the preparation of positive electrodes.

The average particle size of the positive electrode active material can be measured using a laser diffraction/-scattering particle size distribution measuring apparatus. In a case that the LA-920 manufactured by HORIBA Corporation is used as a particle size distribution meter, a 0.1% sodium hexametaphosphate aqueous solution is used as a dispersion medium for measurement, and the measurement is performed with a measurement refractive index set to 1.24 after ultrasonic dispersion for 5 minutes. The average particle size of the positive electrode active material can alternatively be measured using a laser diffraction particle size analyzer (Shimadzu SALD-2300) and a scanning electron microscope (ZEISS EVO18, with the number of samples not less than 100).

## II. Electrolyte

The electrolyte used in the electrochemical apparatus according to this application includes an electrolytic salt and a solvent for dissolving the electrolytic salt. Another main feature of the electrochemical apparatus according to this application is that the electrolyte includes fluoroethylene carbonate.

In some embodiments, based on a mass of the electrolyte, a percentage of the fluoroethylene carbonate is a%, and x and a satisfy: $1 \leq a/x \leq 70$. In some embodiments, $2 \leq a/x \leq 60$. In some embodiments, $5 \leq a/x \leq 50$. In some embodiments, $10 \leq a/x \leq 30$. In some embodiments, a/x is 1, 2, 3, 5, 8, 10, 20, 30, 40, 50, 60, 70, or falls within a range defined by any two of the foregoing values. When the percentage of the fluoroethylene carbonate in the electrolyte and the percentage of element tungsten in the positive electrode active material satisfy the foregoing relationship, this can reduce defects on the surface of the crystal structure of the positive electrode active material, effectively suppress continuous destruction of the surface passivation layer of the positive electrode active material during charge-discharge cycles of the electrochemical apparatus, and reduce the number of repairs, so that the interface stability of the positive electrode active material layer can be fully improved, thereby further improving the low-temperature rate performance and high-temperature and high-pressure safety of the electrochemical apparatus.

In some embodiments, $0.1 \leq a \leq 7$. In some embodiments, $0.1 \leq a \leq 5$. In some embodiments, $0.5 \leq a \leq 3$. In some

embodiments, 1:::;a:::;2. In some embodiments, a is 0.1, 0.2, 0.5, 1, 2, 3, 4, 5, 6, 7, or within a range defined by any two of the foregoing values. When the percentage of the fluoroethylene carbonate in the electrolyte is within the foregoing range, the low-temperature rate performance and high-temperature and high-pressure safety of the electrochemical apparatus is further improved.

In some embodiments, the electrolyte further includes a sulfur-oxygen double bond-containing compound.

In some embodiments, based on the mass of the electrolyte, the mass percentage of the sulfur-oxygen double bond-containing compound is b%, and $0.01 \leq b \leq 5$. In some embodiments, $0.01 \leq b \leq 2$. In some embodiments, $0.05 \leq b \leq 1$. In some embodiments, $0.1 \leq b \leq 0.5$. In some embodiments, x is 0.01, 0.02, 0.05, 0.1, 0.2, 0.3, 0.4, 0.5, 0.6, 0.7, 0.8, 0.9, 1, 1.5, 2, 2.5, 3, 3.5, 4, 4.5, 5, or within a range defined by any two of the foregoing values. When the mass percentage of the sulfur-oxygen double bond-containing compound in the electrolyte is within the foregoing range, the low-temperature rate performance and high-temperature and high-pressure safety of the electrochemical apparatus is further improved.

In some embodiments, b and x satisfy: $1 \leq b/x \leq 50$. In some embodiments, $2 \leq b/x \leq 20$. In some embodiments, $5 \leq b/x \leq 10$. In some embodiments, b/x is 1, 2, 3, 5, 8, 10, 20, 30, 40, 50, or falls within a range defined by any two of the foregoing values. When the mass percentage of the sulfur-oxygen double bond-containing compound in the electrolyte and the percentage of element tungsten in the positive electrode active material satisfy the foregoing relationship, this can reduce defects on the surface of the crystal structure of the positive electrode active material, effectively suppress continuous destruction of the surface passivation layer of the positive electrode active material during charge-discharge cycles of the electrochemical apparatus, and reduce the number of repairs, so that the interface stability of the positive electrode active material layer can be fully improved, thereby further improving the low-temperature rate performance and high-temperature and high-pressure safety of the electrochemical apparatus.

In some embodiments, the sulfur-oxygen double bond-containing compound includes at least one of the following compounds: cyclic sulfate, linear sulfate, linear sulfonate, cyclic sulfonate, linear sulfite, or cyclic sulfite.

In some embodiments, the cyclic sulfate includes but is not limited to one or more of the following: 1,2-ethylene glycol sulfate, 1,2-propanediol sulfate, 1,3-propanediol sulfate, 1,2-butanediol sulfate, 1,3-butanediol sulfate, 1,4-butanediol sulfate, 1,2-pentanediol sulfate, 1,3-pentanediol sulfate, 1,4-pentanediol sulfate, and 1,5-pentanediol sulfate.

In some embodiments, the linear sulfate includes but is not limited to one or more of the following: dimethyl sulfate, ethyl methyl sulfate, and diethyl sulfate.

In some embodiments, the linear sulfonate includes but is not limited to one or more of the following: fluorosulfonate such as methyl fluorosulfonate and ethyl fluorosulfonate, methyl methanesulfonate, ethyl methanesulfonate, butyl dimethanesulfonate, methyl 2-(methanesulfonyloxy) propionate, and ethyl 2-(methanesulfonyloxy) propionate.

In some embodiments, the cyclic sulfonate includes but is not limited to one or more of the following: 1,3-propanesultone, 1-fluoro-1,3-propanesultone, 2-fluoro-1,3-propanesultone, 3-fluoro-1,3-propanesultone, 1-methyl-1,3-propanesultone, 2-methyl-1,3-propanesultone, 3-methyl-1,3-propanesultone, 1-propylene-1,3-sulfonate, 2-propylene-1,3-sulfonate, 1-fluoro-1-propylene-1,3-sulfonate, 2-fluoro-1-propylene-1,3-sulfonate, 3-fluoro-1-propylene-1,3-sulfonate, 1-fluoro-2-propylene-1,3-sulfonate, 2-fluoro-2-propylene-1,3-sulfonate, 3-fluoro-2-propylene-1,3-sulfonate, 1-methyl-1-propylene-1,3-sulfonate, 2-methyl-1-propylene-1,3-sulfonate, 3-methyl-1-propylene-1,3-sulfonate, 1-methyl-2-propylene-1,3-sulfonate, 2-methyl-2-propylene-1,3-sulfonate, 3-methyl-2-propylene-1,3-sulfonate, 1,4-butane sulfonate, 1,5-pentanesulfonate, methylene disulfonate, and ethylene methane disulfonate.

In some embodiments, the linear sulfite includes but is not limited to one or more of the following: dimethyl sulfite, ethyl methyl sulfite, and diethyl sulfite.

In some embodiments, the cyclic sulfite includes but is not limited to one or more of the following: 1,2-ethylene glycol sulfite, 1,2-propanediol sulfite, 1,3-propanediol sulfite, 1,2-butanediol sulfite, 1,3-butanediol sulfite, 1,4-butanediol sulfite, 1,2-pentanediol sulfite, 1,3-pentanediol sulfite, 1,4-pentanediol sulfite, and 1,5-pentanediol sulfite.

In some embodiments, the sulfur-oxygen double bond-containing compound includes a compound of formula I:

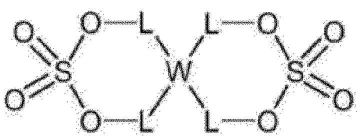 (formula I),

where:

W is selected from

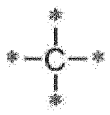 , 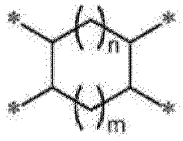 , 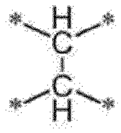 ,

or

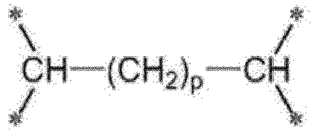 ;

L is independently selected from a single bond or a methylene group;
m is 1, 2, 3, or 4;
n is 0, 1, or 2; and
p is 0, 1, 2, 3, 4, 5, or 6.

In some embodiments, the compound of formula I includes at least one of the following:

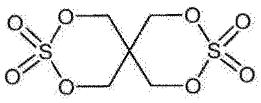 (formula I-1), 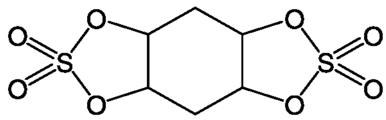 (formula I-2), 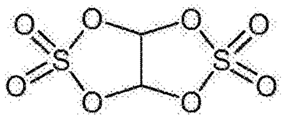 (formula I-3), 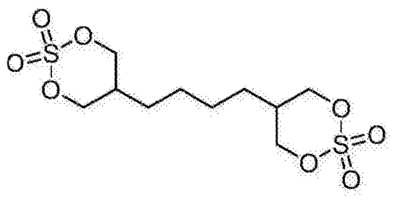 (formula I-4), or 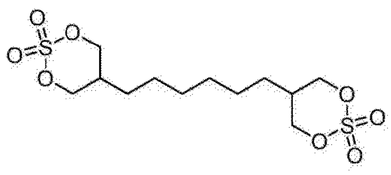 (formula I-5).

In some embodiments, the bicyclic sultone includes a compound of formula II:

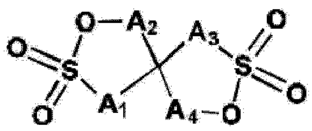 (formula II),

where $A_1$, $A_2$, $A_3$, and $A_4$ each are independently selected from a substituted or unsubstituted C1-3 alkylene group, and when substituted, a substituent is selected from a C1-5 alkyl group, halogen, or a halogenated C1-5 alkyl group.

In some embodiments, the compound of formula II includes at least one of the following:

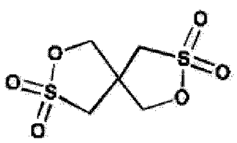 (formula II-1), 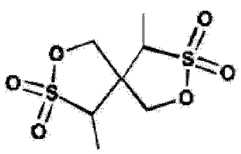 (formula II-2),

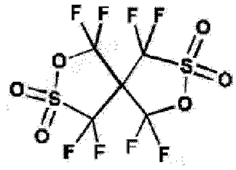 (formula II-3), 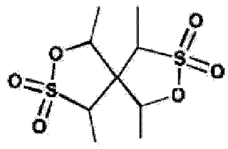 (formula II-4),

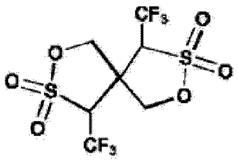 (formula II-5), 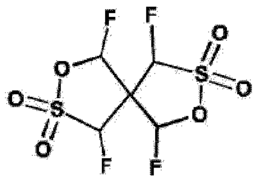 (formula II-6),

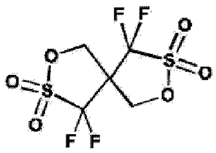 (formula II-7), 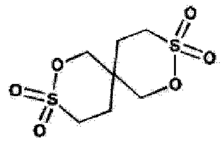 (formula II-8),

or

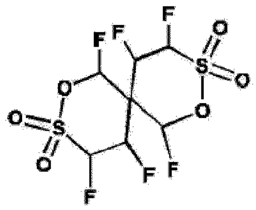 (formula II-9).

In some embodiments, the electrolyte further includes at least one of succinonitrile, adiponitrile, ethylene glycol di(2-cyanoethyl) ether, 1,3,6-hexanetrinitrile, 1,2,3-tris(2-cyanoethoxy)propane, 1,3-propanesultone, ethylene sulfate, vinylene carbonate, or 1-propyl phosphoric acid cyclic anhydride. In some embodiments, based on a mass of the electrolyte, a percentage of the foregoing compound is 0.1% to 6%. In some embodiments, based on the mass of the electrolyte, a percentage of the foregoing compound is 0.5% to 5%. In some embodiments, based on the mass of the electrolyte, a percentage of the foregoing compound is 1% to 3%. These compounds help to stabilize the interface between a positive electrode and the electrolyte, thereby further improving the overcharge resistance and safety of the electrochemical apparatus under high temperature and high pressure.

In some embodiments, the electrolyte further contains any non-aqueous solvent known in the prior art and capable of being used as a solvent for the electrolyte.

In some embodiments, the non-aqueous solvent includes but is not limited to one or more of the following: cyclic carbonate, linear carbonate, cyclic carboxylate, linear carboxylate, cyclic ether, linear ether, a phosphorus-containing organic solvent, a sulfur-containing organic solvent, or an aromatic fluorine-containing solvent.

In some embodiments, instances of the cyclic carbonate may include but are not limited to one or more of the following: ethylene carbonate (EC), propylene carbonate (PC), and butylene carbonate. In some embodiments, the cyclic carbonate has 3 to 6 carbon atoms.

In some embodiments, instances of the linear carbonate may include but are not limited to one or more of the following: dimethyl carbonate, ethyl methyl carbonate, diethyl carbonate (DEC), methyl n-propyl carbonate, ethyl n-propyl carbonate, and dipropyl carbonate. Instances of the linear carbonate substituted with fluorine may include but are not limited to one or more of the following: di(fluoromethyl) carbonate, di(difluoromethyl) carbonate, bis(trifluoromethyl) carbonate, di(2-fluoroethyl) carbonate, bis(2,2-difluoroethyl) carbonate, di(2,2,2-trifluoroethyl) carbonate, 2-fluoroethyl methyl carbonate, 2,2-difluoroethyl methyl carbonate, and 2,2,2-trifluoroethyl methyl carbonate.

In some embodiments, instances of the cyclic carboxylate may include but are not limited to one or more of the following: γ-butyrolactone and γ-valerolactone. In some embodiments, some hydrogen atoms in the cyclic carboxylate may be replaced with fluorine.

In some embodiments, instances of the linear carboxylates may include but are not limited to one or more of the following: methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate,

ethyl butyrate, propyl butyrate, methyl isobutyrate, ethyl isobutyrate, methyl valerate, ethyl valerate, methyl pivalate, and ethyl pivalate. In some embodiments, some hydrogen atoms in the linear carboxylate may be substituted with fluorine. In some embodiments, instances of the fluorine-substituted linear carboxylate may include but are not limited to methyl trifluoroacetate, ethyl trifluoroacetate, propyl trifluoroacetate, butyl trifluoroacetate, and 2,2,2-trifluoroethyl trifluoroacetate.

In some embodiments, instances of the cyclic ether may include but are not limited to one or more of the following: tetrahydrofuran, 2-methyltetrahydrofuran, 1,3-dioxolane, 2-methyl 1,3-dioxolane, 4-methyl 1,3-dioxolane, 1,3-dioxane, 1,4-dioxane, and dimethoxypropane.

In some embodiments, instances of the linear ether may include but are not limited to one or more of the following: dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxyethane, and 1,2-ethoxymethoxyethane.

In some embodiments, instances of the phosphorus-containing organic solvent may include but are not limited to one or more of the following: trimethyl phosphate, triethyl phosphate, dimethyl ethyl phosphate, methyl diethyl phosphate, ethylene methyl phosphate, ethylene ethyl phosphate, triphenyl phosphate, trimethyl phosphite, triethyl phosphite, triphenyl phosphite, tris (2,2,2-trifluoroethyl) phosphate, and tris (2,2,3,3,3-pentafluoropropyl) phosphate.

In some embodiments, instances of the sulfur-containing organic solvent may include but are not limited to one or more of the following: sulfolane, 2-methylsulfolane, 3-methylsulfolane, dimethyl sulfone, diethyl sulfone, ethyl methyl sulfone, methyl propyl sulfone, dimethyl sulfoxide, methyl methanesulfonate, ethyl methanesulfonate, methyl ethanesulfonate, ethyl ethanesulfonate, dimethyl sulfate, diethyl sulfate, and dibutyl sulfate. In some embodiments, some hydrogen atoms in the sulfur-containing organic solvent may be substituted with fluorine.

In some embodiments, the aromatic fluorine-containing solvent includes but is not limited to one or more of the following: fluorobenzene, difluorobenzene, trifluorobenzene, tetrafluorobenzene, pentafluorobenzene, hexafluorobenzene, and trifluoromethylbenzene.

In some embodiments, the solvent used in the electrolyte of this application includes cyclic carbonate, linear carbonate, cyclic carboxylate, linear carboxylate, and a combination thereof. In some embodiments, the solvent used in the electrolyte of this application includes an organic solvent selected from a group consisting of the following substances: ethylene carbonate, propylene carbonate, diethyl carbonate, ethyl propionate, propyl propionate, propyl acetate, ethyl acetate, and a combination thereof. In some embodiments, the solvent used in the electrolyte of this application includes ethylene carbonate, propylene carbonate, diethyl carbonate, ethyl propionate, propyl propionate, γ-butyrolactone, and a combination thereof.

In some embodiments, the electrolytic salt is not particularly limited, and any substance well-known as an electrolytic salt can be used. For a lithium secondary battery, a lithium salt is typically used as the electrolytic salt. Instances of the electrolytic salt may include but are not limited to: inorganic lithium salts such as $LiPF_6$, $LiBF_4$, $LiClO_4$, $LiAlF_4$, $LiSbF_6$, and $LiWF_7$; lithium tungstate such as $LiWOF_5$; lithium carboxylate salts such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$; lithium sulfonate salts such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, and $CF_3CF_2CF_2CF_2SO_3Li$; lithium imide salts such as $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, and $LiN(CF_3SO_2)(C_4F_9SO_2)$; lithium methide salts such as $LiC(FSO_2)_3$, $LiC(CF_3SO_2)_3$, and $LiC(C_2F_5SO_2)_3$; lithium (malonato)borate salts such as a lithium di(malonato)borate salt and a lithium difluoro(malonato)borate salt; lithium (malonato)phosphate salts such as lithium tris(malonato)phosphate, lithium difluorodi(malonato) phosphate, and lithium tetrafluoro(malonato)phosphate; fluorine-containing organic lithium salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)_2$, $LiBF_2(C_2F_5)_2$, $LiBF_2(CF_3SO_2)_2$, and $LiBF_2(C_2F_5SO_2)_2$; lithium oxalatoborate salts such as lithium difluoro(oxalato)borate and lithium di(oxalato)borate; and lithium oxalatophosphate salts such as lithium tetrafluoro(oxalato)phosphate, lithium difluorobis(oxalato)phosphate, and lithium tris(oxalato)phosphate.

In some embodiments, the electrolytic salt is selected from $LiPF_6$, $LiSbF_6$, $FSO_3Li$, $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, $LiPF_3(C_2F_5)_3$, lithium difluoro(oxalato)borate, lithium bis(oxalato)borate, or lithium difluorobis(oxalato)phosphate. This helps to improve the performance of the electrochemical apparatus such as output power, high-rate charging and discharging, high-temperature storage, and cycling.

The concentration of the electrolytic salt is not particularly limited, provided that the effects of this application are not impaired. In some embodiments, a total molar concentration of lithium in the electrolyte is greater than 0.3 mol/L, greater than 0.4 mol/L, or greater than 0.5 mol/L. In some embodiments, the total molar concentration of lithium in the electrolyte is less than 3 mol/L, less than 2.5 mol/L, or less than 2.0 mol/L. In some embodiments, the total molar concentration of lithium in the electrolyte is within a range defined by any two of the foregoing values. When the concentration of the electrolytic salt is within the foregoing range, the amount of lithium as charged particles would

not be excessively small, and the viscosity can be controlled within an appropriate range, so as to ensure good conductivity.

When two or more electrolytic salts are used, the electrolytic salts include at least one salt selected from a group consisting of monofluorophosphate, borate, oxalate, and fluorosulfonate. In some embodiments, the electrolytic salt includes a salt selected from a group consisting of monofluorophosphate, oxalate, and fluorosulfonate. In some embodiments, the electrolytic salt includes a lithium salt. In some embodiments, based on a weight of the electrolytic salt, a percentage of the salt selected from a group consisting of monofluorophosphate, borate, oxalate, and fluorosulfonate is greater than 0.01% or greater than 0.1%. In some embodiments, based on the weight of the electrolytic salt, the percentage of the salt selected from the group consisting of monofluorophosphate, borate, oxalate, and fluorosulfonate is less than 20% or less than 10%. In some embodiments, the percentage of the salt selected from the group consisting of monofluorophosphate, borate, oxalate, and fluorosulfonate is within a range defined by any two of the foregoing values.

In some embodiments, the electrolytic salt includes one or more substances selected from the group consisting of monofluorophosphate, borate, oxalate, and fluorosulfonate, and one or more salts different from the one or more substances. The salt different from the one or more substances may include lithium salts exemplified above and in some embodiments, are $LiPF_6$, $LiN(FSO_2)(CF_3SO_2)$, $LiN(CF_3SO_2)_2$, $LiN(C_2F_5SO_2)_2$, lithium cyclic 1,2-perfluoroethane disulfonimide, lithium cyclic 1,3-perfluoropropane disulfonimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, and $LiPF_3(C_2F_5)_3$. In some embodiments, the salt different from the one or more substances is $LiPF_6$.

In some embodiments, based on the weight of the electrolytic salts, a percentage of the salt different from the one or more substances is greater than 0.01% or greater than 0.1%. In some embodiments, based on the weight of the electrolytic salts, the percentage of the salt different from the one or more substances is less than 20%, less than 15%, or less than 10%. In some embodiments, the percentage of the salt different from the one or more substances is within a range defined by any two of the foregoing values. The salt different from the one or more substances and of the foregoing percentage helps to balance the conductivity and viscosity of the electrolyte.

## III. Negative electrode

The negative electrode includes a negative electrode current collector and a positive electrode active material layer disposed on one or two surfaces of the negative electrode current collector, and the negative electrode active material layer includes a negative electrode active material. The negative electrode active material layer may be one layer or a plurality of layers, and each of the plurality of negative electrode active material layers may contain the same or different negative electrode active materials. The negative electrode active material is any material capable of reversibly intercalating and deintercalating metal ions such as lithium ions. In some embodiments, a rechargeable capacity of the negative electrode active material is greater than a discharge capacity of the positive electrode active material to prevent lithium metal from unexpectedly precipitating onto the negative electrode during charging.

Any well-known current collector may be used as a current collector for holding the negative electrode active material. Instances of the negative electrode current collector include but are not limited to metal materials such as aluminum, copper, nickel, stainless steel, and nickel-plated steel. In some embodiments, the negative electrode current collector is made of copper.

In a case that the negative electrode current collector is made of a metal material, the form of the negative electrode current collector may include but is not limited to a metal foil, a metal cylinder, a metal coil, a metal plate, a metal film, a sheet metal mesh, a punched metal, and a foamed metal. In some embodiments, the negative electrode current collector is made of a metal film. In some embodiments, the negative electrode current collector is made of a copper foil. In some embodiments, the negative electrode current collector is made of a rolled copper foil based on a rolling method or an electrolytic copper foil based on an electrolytic method.

In some embodiments, the thickness of the negative electrode current collector is greater than 1 $\mu$m or greater than 5 $\mu$m. In some embodiments, the thickness of the negative electrode current collector is less than 100 $\mu$m or less than 50 $\mu$m. In some embodiments, the thickness of the negative electrode current collector is within a range defined by any two of the foregoing values.

The negative electrode active material is not particularly limited, provided that it can reversibly absorb and release lithium ions. Instances of the negative electrode active material may include but are not limited to: carbon materials such as natural graphite and artificial graphite; metals such as silicon (Si) and tin (Sn); or oxides of metal elements such as Si and Sn. The negative electrode active materials may be used alone or in combination.

The negative electrode active material layer may further include a negative electrode binder. The negative electrode binder can improve binding between particles of the negative electrode active material and binding between the negative electrode active material and the current collector. The negative electrode binder is not particularly limited in type, provided that its material is stable to the electrolyte or a solvent used in the manufacture of electrodes. In some embodiments, the negative electrode binder includes a resin binder. Instances of the resin binder include but are not

limited to fluororesins, polyacrylonitrile (PAN), polyimide resins, acrylic resins, and polyolefin resins. When an aqueous solvent is used to prepare a negative electrode mixture slurry, the negative electrode binder includes but is not limited to carboxymethyl cellulose (CMC) or its salt, styrene-butadiene rubber (SBR), polyacrylic acid (PAA) or its salt, and polyvinyl alcohol.

The negative electrode may be prepared by using the following method: applying the negative electrode mixture slurry containing the negative electrode active material, the resin binder, and the like on the negative electrode current collector, and after drying, performing rolling to form a negative electrode active material layer on two surfaces of the negative electrode current collector, to obtain the negative electrode.

## IV. Separator

In order to prevent short circuit, a separator is typically provided between the positive electrode and the negative electrode. In this case, the electrolyte of this application typically infiltrates the separator.

The material and shape of the separator are not particularly limited, provided that the separator does not significantly impair the effects of this application. The separator may be resin, glass fiber, an inorganic substance, or the like that is formed of a material stable to the electrolyte of this application. In some embodiments, the separator includes a porous sheet or nonwoven fabric-like substance having an excellent fluid retention property, or the like. Instances of the material of the resin or glass fiber separator may include but are not limited to polyolefin, aromatic polyamide, polytetrafluoroethylene, and polyethersulfone. In some embodiments, the polyolefin is polyethylene or polypropylene. In some embodiments, the polyolefin is polypropylene. The materials of the separator may be used alone or in any combination.

The separator may alternatively be a material formed by stacking the foregoing materials, and instances thereof include but are not limited to a three-layer separator formed by stacking polypropylene, polyethylene, and polypropylene in order.

Instances of the material of the inorganic substance may include but are not limited to: oxides such as aluminum oxide and silicon dioxide; nitrides such as aluminum nitride and silicon nitride; and sulfate (for example, barium sulfate and calcium sulfate). The form of the inorganic substance may include but is not limited to a granular or fibrous form.

The form of the separator may be a thin-film form, and instances thereof include but are not limited to a non-woven fabric, a woven fabric, and a microporous film. In the thin-film form, the separator has a pore diameter of 0.01 μm to 1 μm and a thickness of 5 μm to 50 μm. In addition to the standalone thin-film-like separator, the following separator may alternatively be used: a separator that is obtained by using a resin-based binder to form a composite porous layer containing inorganic particles on the surface of the positive electrode and/or the negative electrode, for example, a separator that is obtained by using fluororesin as a binder to form a porous layer on two surfaces of the positive electrode with aluminum oxide particles of which 90% have a particle size less than 1 μm.

The thickness of the separator is random. In some embodiments, the thickness of the separator is greater than 1 μm, greater than 5 μm, or greater than 8 μm. In some embodiments, the thickness of the separator is less than 50 μm, less than 40 μm, or less than 30 μm. In some embodiments, the thickness of the separator is within a range defined by any two of the foregoing values. When the thickness of the separator is within the foregoing range, its insulation performance and mechanical strength can be ensured, and the rate performance and energy density of the electrochemical apparatus can also be ensured.

When a porous material such as a porous sheet or a nonwoven fabric is used as the separator, the porosity of the separator is random. In some embodiments, the porosity of the separator is greater than 10%, greater than 15%, or greater than 20%. In some embodiments, the porosity of the separator is less than 60%, less than 50%, or less than 45%. In some embodiments, the porosity of the separator is within a range defined by any two of the foregoing values. When the porosity of the separator is within the foregoing range, its insulation performance the mechanical strength can be ensured and film resistance can be suppressed, so that the electrochemical apparatus has good safety performance.

The average pore diameter of the separator is also random. In some embodiments, the average pore diameter of the separator is less than 0.5 μm or less than 0.2 μm. In some embodiments, the average pore diameter of the separator is greater than 0.05 μm. In some embodiments, the average pore diameter of the separator is within a range defined by any two of the foregoing values. If the average pore diameter of the separator exceeds the foregoing range, a short circuit is likely to occur. When the average pore diameter of the separator is within the foregoing range, the electrochemical apparatus has good safety performance.

## V. Assemblies of electrochemical apparatus

The assemblies of the electrochemical apparatus include an electrode assembly, a collector structure, an outer packing case, and a protective element.

The electrode assembly may be any one of a laminated structure in which the positive electrode and the negative electrode are laminated with the separator interposed therebetween, and a structure in which the positive electrode and

the negative electrode are wound in a swirl shape with the separator interposed therebetween. In some embodiments, a mass percentage of the electrode assembly (occupancy of the electrode assembly) in the internal volume of the battery is greater than 40% or greater than 50%. In some embodiments, the occupancy of the electrode assembly is less than 90% or less than 80%. In some embodiments, the occupancy of the electrode assembly is within a range defined by any two of the foregoing values. When the occupancy of the electrode assembly is within the foregoing range, the capacity of the electrochemical apparatus can be ensured, degradation in repeated charge/discharge performance and high temperature storage property caused by an increasing internal pressure can be suppressed.

The collector structure is not particularly limited. In some embodiments, the collector structure is a structure to reduce the resistance of wiring portions and bonding portions. When the electrode assembly is the foregoing laminated structure, a structure in which metal core portions of the electrode layers are bundled and welded to terminals can be used. An increase in electrode area causes a higher internal resistance; therefore, it is also acceptable that more than two terminals are provided in the electrode to decrease the resistance. When the electrode assembly has the foregoing winding structure, two or more lead structures are provided at each of the positive electrode and the negative electrode, and are bundled at the terminals, so as to reduce the internal resistance.

The material of the outer packing case is not particularly limited, provided that the material is a substance stable to the electrolyte in use. The outer packing case may use but is not limited to a nickel-plated steel plate, stainless steel, metals such as aluminum, aluminum alloy, or magnesium alloy, or laminated films of resin and aluminum foil. In some embodiments, the outer packing case is made of metal including aluminum or an aluminum alloy, or is made of a laminated film.

The metal outer packing case includes but is not limited to a sealed packaging structure formed by depositing metal through laser welding, resistance welding, or ultrasonic welding; or a riveting structure formed by using the foregoing metal or the like with a resin pad disposed therebetween. The outer packing case using the laminated film includes but is not limited to a sealed packaging structure formed by thermally adhering resin layers. In order to improve the sealing property, a resin different from the resin used in the laminated film may be sandwiched between the resin layers. When the sealed structure is formed by thermally adhering the resin layers through current collecting terminals, a resin having a polar group or a modified resin into which a polar group is introduced may be used as the sandwiched resin in consideration of the bonding of metal and resin. In addition, the outer packing case may be in any random shape. For example, it may have any one of a cylindrical shape, a square shape, a laminated form, a button form, a large form, or the like.

The protective element may use a positive temperature coefficient (PTC), a temperature fuse, or a thermistor whose resistance increases during abnormal heat release or flowing of excessive current, a valve (current cutoff valve) for cutting off a current flowing in a circuit by sharply increasing an internal pressure or an internal temperature of a battery during abnormal heat release, or the like. The protective element may be selected from elements that do not operate in conventional high-current use scenarios, or such design may be used that abnormal heat release or thermal runaway does not occur even without a protective element.

The electrochemical apparatus according to this application includes any apparatus in which electrochemical reactions take place. Specific instances of the apparatus include lithium metal secondary batteries or lithium-ion secondary batteries.

This application further provides an electronic apparatus, including the electrochemical apparatus according to this application.

The electrochemical apparatus according to this application is not particularly limited to any purpose, and may be used for any known electronic apparatus in the prior art. In some embodiments, the electrochemical apparatus according to this application may be used without limitation in notebook computers, pen-input computers, mobile computers, electronic book players, portable telephones, portable fax machines, portable copiers, portable printers, stereo headsets, video recorders, liquid crystal display televisions, portable cleaners, portable CD players, mini-disc players, transceivers, electronic notebooks, calculators, storage cards, portable recorders, radios, backup power sources, motors, automobiles, motorcycles, motor bicycles, bicycles, lighting appliances, toys, game machines, clocks, electric tools, flash lamps, cameras, large household batteries, lithium-ion capacitors, and the like.

The following uses a lithium-ion battery as an example and describes the preparation of lithium-ion batteries with reference to specific examples. Those skilled in the art understand that the preparation method described in this application is only an example and that all other suitable preparation methods fall within the scope of this application.

## Examples

### I. Preparation of lithium-ion battery

1. Preparation of negative electrode

Artificial graphite, styrene-butadiene rubber, and sodium carboxymethylcellulose at a mass ratio of 96%:2%:2%

were mixed in deionized water. The mixture was stirred evenly to obtain a negative electrode slurry. The negative electrode slurry was applied onto a 9 μm copper foil, followed by drying, cold pressing, cutting, and tab welding, to obtain a negative electrode.

2. Preparation of positive electrode

(1) Preparation of lithium nickel cobalt manganate positive electrode active material containing element tungsten: Anhydrous ethanol and deionized water were mixed at a volume ratio of 7:3 to obtain a solution; 0.05 mol of nickel nitrate hexahydrate, 0.02 mol of cobalt nitrate hexahydrate, and 0.03 mol of manganese acetate tetrahydrate were added to the solution, and ultrasonic stirring was performed to completely dissolve them; a resulting mixed solution was transferred to a medium 500 mL high-pressure reactor, and 0.6 mol of ammonium bicarbonate was added to the reactor; the reactor was heated to and kept at 120°C for 8 hours and then cooled, and the solution was centrifuged for separation; a precipitate was collected and washed with anhydrous ethanol 3 times, followed by vacuum drying at 60°C for 8 hours to produce a nickel-cobalt-manganese hydroxide precursor; and then, lithium carbonate, tungsten oxide, and the produced cobalt-manganese hydroxide precursor were fully mixed and ground, calcined in a tube furnace at 900°C for 20 hours, cooled and then ground again to obtain a lithium nickel cobalt manganate positive electrode active material containing element tungsten.

(2) Preparation of lithium cobalt oxide positive electrode active material containing element tungsten: A certain amount of $Co_3O_4$ and LiOH powder were weighed, fully mixed and ground in an agate mortar, followed by calcination at 900°C for 10 hours to produce a mixture; and a certain amount of sodium tungstate was added into the calcined mixture, and ethanol was added as a solvent, and then a resulting mixture was ball-milled for 10 hours and calcined at 800°C for 10 hours to obtain a lithium cobalt oxide positive electrode active material containing element tungsten.

Aluminum oxide, carbon nanotubes, and polyacrylate at a mass ratio of 65:25:10 were mixed with deionized water and stirred well to obtain an insulating layer or primer layer slurry. The insulating layer or primer layer slurry was applied on a 12 μm aluminum foil.

The positive electrode active material, carbon nanotubes, and polyvinylidene fluoride at a mass ratio of 97:1:2 were mixed with N-methylpyrrolidone (NMP) and stirred well to obtain a positive electrode active material layer slurry. The positive electrode active material layer slurry was applied onto the primer layer or aluminum foil, followed by drying, cold pressing, cutting, and tab welding, to obtain a positive electrode.

3. Preparation of electrolyte

In a dry argon environment, EC, PC, PP, and DEC were mixed (at a weight ratio of 1:1:1:1), added with $LiPF_6$ and mixed well to form a base electrolyte, where a concentration of $LiPF_6$ was 12.5%. Different amounts of additives were added to the base electrolyte, to obtain electrolytes used in different examples and comparative examples.

Abbreviations and full names of components in the electrolyte are listed in the following table.

| Name of material | Abbreviation | Name of material | Abbreviation |
|---|---|---|---|
| Ethylene carbonate | EC | Ethylene carbonate | PC |
| Diethyl carbonate | DEC | Fluoroethylene carbonate | FEC |
| Succinonitrile | SN | Adiponitrile | ADN |
| Ethylene glycol di(2-cyanoethyl) ether | EDN | 1,3,6-hexanetrinitrile | HTCN |
| 1,2,3-tris(2-cyanoet hoxy)propane | TCEP | 1,3-propanesultone | PS |
| Ethylene sulfate | DTD | Compound of formula I-1 | Formula 1-1 |
| Compound of formula I-3 | Formula I-3 | Compound of formula I-4 | Formula 1-4 |
| Compound of formula II-1 | Formula 2-1 | | |
| Lithium difluorophosphate | LDP | 1-propyl phosphoric acid cyclic anhydride | T3P |
| Vinyl ethylene carbonate | VC | Propyl propionate | PP |

4. Preparation of separator

A polyethylene porous polymer film was used as the separator.

5. Preparation of lithium-ion battery

The obtained positive electrode, separator, and negative electrode were wound in order and placed in an outer packaging foil, with an injection opening left. An electrolyte was injected via the injection opening, followed by processes such as packaging, formation, and capacity grading, to obtain a lithium-ion battery.

## II. Test methods

1. Method for testing overcharge deformation rate of lithium-ion battery

At 25°C, the lithium-ion battery was left standing for 30 minutes, charged to 4.45 V at a constant current of 0.5C, then charged to 0.05C at a constant voltage of 4.45 V, and left standing for 60 minutes. Thickness 1 of the lithium-ion battery was measured. Then, the lithium-ion battery was charged at a constant current rate of 0.1C for 60 minutes and left standing for 30 minutes. The steps of charging at 0.1C and standing were repeated for 5 times until the lithium-ion battery reached 150% state of charge (SOC). Thickness 2 of the lithium-ion battery was measured. The overcharge deformation rate of the lithium-ion battery was calculated by using the following formula:

Overcharge deformation rate = [(thickness 2-thickness 1)/thickness 1]×100%.

2. Method for testing high-temperature short-circuit deformation rate of lithium-ion battery

At 25°C, the lithium-ion battery was left standing for 30 minutes, charged to 4.7 V at a constant current of 0.5C, then charged to 0.05C at a constant voltage of 4.7 V, and left standing for 60 minutes. Thickness $T_1$ of the lithium-ion battery was measured. Then the lithium-ion battery was short-circuited at 100 mΩ for 10 seconds. Then thickness $T_2$ of the lithium-ion battery was measured. The high-temperature short-circuit deformation rate of the lithium-ion battery was calculated by using the following formula:

$$\text{Short-circuit deformation rate} = [(T_2 - T_1)/T_1] \times 100\%.$$

3. Method for testing low-temperature rate performance of lithium-ion battery

At -20°C, the lithium-ion battery was discharged at 0.2C to 3.0 V, left standing for 5 minutes, charged at 0.5C to 4.7 V, charged at constant voltage to 0.05C, left standing for 5 minutes, and then discharged at 0.2C and 5.0C respectively to obtain discharge capacity 1 and discharge capacity 2. The low-temperature rate of the lithium-ion battery was calculated by using the following formula:

Low-temperature rate = [discharge capacity 2/discharge capacity 1]×100%.

## III. Test results

Table 1 shows the influence of the positive electrode active material and the electrolyte on the low-temperature rate performance and high-temperature and high-pressure safety of the lithium-ion battery. Examples 1-1 to 1-19 and Comparative examples 1-1 to 1-3 used lithium nickel cobalt manganate with/without element tungsten as the positive electrode active material. Example 1-20 and Comparative examples 1-4, 1-5, and 1-6 used lithium cobalt oxide with/-without element tungsten as the positive electrode active material.

**Table 1**

| | Percentage a of FEC in electrolyte (wt%) | Percentage x of element tungsten in positive electrode active material (wt%) | a/x | Overcharge deformation rate (%) | Short-circuit deformation rate (%) | Low-temperature rate (%) |
|---|---|---|---|---|---|---|
| Example 1-1 | 3 | 0.1 | 30 | 20.1 | 22.3 | 67.3 |
| Example 1-2 | 1 | 0.1 | 10 | 21.2 | 23.5 | 65.1 |
| Example 1-3 | 2 | 0.1 | 20 | 20.9 | 22.7 | 66.1 |
| Example 1-4 | 4 | 0.1 | 40 | 18.7 | 19.5 | 68.2 |
| Example 1-5 | 5 | 0.1 | 50 | 17.6 | 18.1 | 69.1 |
| Example 1-6 | 6 | 0.1 | 60 | 17.5 | 17.8 | 69.5 |
| Example 1-7 | 7 | 0.1 | 70 | 17.3 | 17.4 | 69.2 |
| Example 1-8 | 8 | 0.1 | 80 | 26.2 | 28.9 | 61.1 |
| Example 1-9 | 0.1 | 0.1 | 1 | 23.5 | 22.6 | 66.2 |
| Example 1-10 | 0.05 | 0.1 | 0.5 | 27.1 | 28.3 | 56.1 |
| Example 1-11 | 3 | 0.01 | 300 | 29.3 | 30.1 | 53.2 |
| Example 1-12 | 3 | 0.05 | 60 | 26.6 | 27.3 | 58.7 |
| Example 1-13 | 3 | 0.15 | 20 | 18.3 | 17.2 | 70.1 |
| Example 1-14 | 3 | 0.2 | 15 | 17.8 | 16.7 | 71.2 |
| Example 1-15 | 3 | 0.25 | 12 | 16.9 | 16.6 | 71.8 |
| | Percentage a of FEC in electrolyte (wt%) | Percentage x of element tungsten in positive electrode active material (wt%) | a/x | Overcharge deformation rate (%) | Short-circuit deformation rate (%) | Low-temperature rate (%) |
| Example 1-16 | 3 | 0.3 | 10 | 15.8 | 16.2 | 72.3 |

(continued)

| | Percentage a of FEC in electrolyte (wt%) | Percentage x of element tungsten in positive electrode active material (wt%) | a/x | Overcharge deformation rate (%) | Short-circuit deformation rate (%) | Low-temperature rate (%) |
|---|---|---|---|---|---|---|
| Example 1-17 | 3 | 0.5 | 6 | 15.3 | 16 | 72.9 |
| Example 1-18 | 3 | 1 | 3 | 19.4 | 21.5 | 67.1 |
| Example 1-19 | 3 | 1.5 | 2 | 24.8 | 23.9 | 63.3 |
| Comparative example 1-1 | 0 | 0 | - | 56.9 | 61.8 | 43.2 |
| Comparative example 1-2 | 0 | 0.1 | - | 51.4 | 55.3 | 50.7 |
| Comparative example 1-3 | 3 | 0 | - | 52.7 | 50.5 | 51.9 |
| | | | | | | |
| Example 1-20 | 3 | 0.1 | 30 | 23.9 | 24.7 | 63.9 |
| Comparative example 1-4 | 0 | 0 | - | 61.5 | 62.7 | 42.1 |
| Comparative example 1-5 | 0 | 0.1 | - | 59.7 | 57.9 | 43.8 |
| Comparative example 1-6 | 3 | 0 | - | 58.9 | 53.6 | 45.7 |

As shown in Comparative example 1-1, when the positive electrode active material was undoped lithium nickel cobalt manganate and the electrolyte contained no FEC, the lithium-ion battery had a high overcharge deformation rate and short-circuit deformation rate and a low low-temperature rate. As shown in Comparative example 1-2, when the positive electrode active material was lithium nickel cobalt manganate containing element tungsten and the electrolyte contained no FEC, the lithium-ion battery had a high overcharge deformation rate and short-circuit deformation rate and a low low-temperature rate. As shown in Comparative example 1-3, when the electrolyte contained FEC and the positive electrode active material was undoped lithium nickel cobalt manganate, the lithium-ion battery had a high overcharge deformation rate and short-circuit deformation rate and a low low-temperature rate.

As shown in Examples 1-1 to 1-19, when the positive electrode active material was lithium nickel cobalt manganate containing element tungsten and the electrolyte contained FEC, the overcharge deformation rate and short-circuit deformation rate of the lithium-ion battery can be significantly reduced, and the low-temperature rate of the lithium-ion battery can be significantly improved.

When the percentage a% of FEC in the electrolyte and the percentage x% of element tungsten in the positive electrode active material satisfied $1 \leq a/x \leq 70$, the overcharge deformation rate and short-circuit deformation rate of the lithium-ion battery can be further reduced, and the low-temperature rate of the lithium-ion battery can be significantly improved.

When the percentage of FEC in the electrolyte was within the range from 0.1% to 7%, the overcharge deformation rate and short-circuit deformation rate of the lithium-ion battery can be further reduced, and the low-temperature rate of the lithium-ion battery can be significantly improved.

When the percentage of element tungsten in the positive electrode active material was from 0.05% to 1%, the overcharge deformation rate and short-circuit deformation rate of the lithium-ion battery can be further reduced, and the low-temperature rate of the lithium-ion battery can be significantly improved.

In addition, as shown in Comparative examples 1-4 to 1-6 and Example 1-20, when the positive electrode active material was lithium cobalt oxide containing element tungsten and the electrolyte contained FEC, the overcharge deformation rate and short-circuit deformation rate of the lithium-ion battery can be further reduced, and the low-temperature rate of the lithium-ion battery can be significantly improved. Compared with lithium cobalt oxide containing element tungsten, lithium nickel cobalt manganate containing element tungsten exhibits a more significant improvement in the performance of lithium-ion battery.

Table 2 shows the influence, of the sulfur-oxygen double bond-containing compound in the electrolyte and the relationship between the mass percentage of the sulfur-oxygen double bond-containing compound and the percentage of element tungsten in the positive electrode active material, on the low-temperature rate performance and high-temperature and high-pressure safety of the lithium-ion battery. Except for the parameters listed in Table 2, the settings in Examples 2-1 to 2-25 were the same as those in Example 1-1.

**Table 2**

| | Sulfur-oxygen double bond-containing compound in electrolyte | | Percentage x of element tungsten in positive electrode active material (wt%) | b/x | Overcharge deformation rate (%) | Short-circuit deformation rate (%) | Low-temperature rate (%) |
|---|---|---|---|---|---|---|---|
| | Type | Percentage b (wt%) | | | | | |
| Example 1-1 | - | - | 0.1 | - | 20.1 | 22.3 | 67.3 |
| Example 2-1 | PS | 1 | 0.1 | 10 | 17.2 | 16.6 | 73.5 |
| Example 2-2 | PS | 1.5 | 0.1 | 15 | 16.3 | 16.1 | 73.9 |
| Example 2-3 | PS | 2 | 0.1 | 20 | 16.8 | 16.3 | 72.1 |
| Example 2-4 | PS | 2.5 | 0.1 | 25 | 18.2 | 19.9 | 69.2 |
| Example 2-5 | PS | 0.01 | 0.1 | 0.1 | 19.3 | 21.4 | 70.6 |

(continued)

| | Sulfur-oxygen double bond-containing compound in electrolyte | | Percentage x of element tungsten in positive electrode active material (wt%) | b/x | Overcharge deformation rate (%) | Short-circuit deformation rate (%) | Low-temperature rate (%) |
|---|---|---|---|---|---|---|---|
| | Type | Percentage b (wt%) | | | | | |
| Example 2-6 | PS | 0.005 | 0.1 | 0.05 | 19.8 | 21.8 | 67.3 |
| Example 2-7 | PS | 5 | 0.1 | 50 | 18.9 | 20.7 | 68.1 |
| Example 2-8 | PS | 7 | 0.1 | 70 | 24.8 | 21.1 | 68.2 |
| Example 2-9 | PS | 1 | 0.01 | 100 | 18.8 | 21 | 69.1 |
| Example 2-10 | PS | 1 | 0.05 | 20 | 16.5 | 16.3 | 72.5 |
| Example 2-11 | PS | 1 | 0.15 | 6.7 | 16.7 | 15.9 | 74.6 |
| Example 2-12 | PS | 1 | 0.2 | 5 | 15.3 | 16.1 | 75.7 |
| Example 2-13 | PS | 1 | 0.25 | 4 | 15.7 | 16.4 | 76.7 |
| Example 2-14 | PS | 1 | 0.3 | 3.33 | 14.2 | 14.7 | 77.8 |
| Example 2-15 | PS | 1 | 0.5 | 2 | 14.1 | 15.6 | 78.2 |
| Example 2-16 | PS | 1 | 1 | 1 | 15.2 | 19.6 | 74.9 |
| Example 2-17 | PS | 1 | 1.5 | 0.67 | 17.3 | 19.7 | 71.8 |
| Example 2-18 | Formula I-1 | 2 | 0.1 | 20 | 13.4 | 13.2 | 80.2 |
| Example 2-19 | Formula I-1 | 2 | 0.15 | 13.3 | 13.1 | 12.7 | 81.3 |
| Example 2-20 | Formula I-3 | 2 | 0.1 | 20 | 12.4 | 12.3 | 81.2 |
| Example 2-21 | Formula I-3 | 2 | 0.15 | 13.3 | 12.1 | 11.9 | 82.7 |
| Example 2-22 | Formula I-4 | 2 | 0.1 | 20 | 11.6 | 10.9 | 83.3 |
| Example 2-23 | Formula I-4 | 2 | 0.15 | 13.3 | 11.3 | 10.3 | 83.8 |
| Example 2-24 | Formula II-1 | 2 | 0.1 | 20 | 11.2 | 10.4 | 84.7 |
| Example 2-25 | Formula II-1 | 2 | 0.15 | 13.3 | 10.8 | 10.1 | 85.2 |

The results show that when 0.01% to 5% of the sulfur-oxygen double bond-containing compound was further added to the electrolyte already containing FEC, the overcharge deformation rate and short-circuit deformation rate of the lithium-ion battery can be further reduced, and the low-temperature rate of the lithium-ion battery can be significantly improved.

When the percentage b% of the sulfur-oxygen double bond-containing compound in the electrolyte and the percentage x% of element tungsten in the positive electrode active material satisfied 1≤b/x≤50, the overcharge deformation rate and short-circuit deformation rate of lithium ion battery can be further reduced and its low-temperature rate can be significantly improved.

Table 3 shows the influence of the mass percentage of element aluminum in the insulating layer and the percentage of element tungsten in the positive electrode active material on the low-temperature rate performance and high-temperature and high-pressure safety of the lithium-ion battery. Except for the parameters listed in Table 3, the settings in Examples 3-1 to 3-16 were the same as those in Example 1-1.

**Table 3**

| | Percentage $y_1$ of element aluminum in insulating layer (wt%) | Percentage x of element tungsten in positive electrode active material (wt%) | $y_1/x$ | Overcharge deformation rate (%) | Short-circuit deformation rate (%) | Low-temperature rate (%) |
|---|---|---|---|---|---|---|
| Example 1-1 | 0 | 0.1 | - | 20.1 | 22.3 | 67.3 |
| Example 3-1 | 30 | 0.1 | 300 | 17.3 | 14.5 | 72.8 |
| Example 3-2 | 40 | 0.1 | 400 | 17.1 | 13.7 | 73.1 |
| Example 3-3 | 50 | 0.1 | 500 | 16.4 | 12.1 | 73.5 |
| Example 3-4 | 60 | 0.1 | 600 | 16 | 11.8 | 75.9 |
| Example 3-5 | 65 | 0.1 | 650 | 15.7 | 12.5 | 76.8 |
| Example 3-6 | 70 | 0.1 | 700 | 17.5 | 16.3 | 72.6 |
| Example 3-7 | 20 | 0.1 | 200 | 16.9 | 15.2 | 73.1 |
| Example 3-8 | 40 | 0.01 | 4000 | 18.1 | 16.2 | 71.5 |
| Example 3-9 | 40 | 0.05 | 800 | 18.3 | 15.9 | 71.1 |
| Example 3-10 | 40 | 0.15 | 267 | 15.6 | 13.1 | 73.8 |
| Example 3-11 | 40 | 0.2 | 200 | 15.2 | 12.5 | 74.5 |
| Example 3-12 | 40 | 0.25 | 160 | 15.7 | 13.7 | 75.8 |
| Example 3-13 | 40 | 0.3 | 133 | 16.2 | 13.9 | 74.3 |
| Example 3-14 | 40 | 0.5 | 80 | 16.7 | 14.1 | 73.2 |
| Example 3-15 | 50 | 1 | 50 | 17.3 | 14.2 | 73.1 |
| Example 3-16 | 50 | 1.5 | 33.3 | 18.7 | 16.7 | 70.5 |

The results show that when the percentage $y_1$% of element aluminum in the positive electrode insulating layer and the percentage x% of element tungsten in the positive electrode active material satisfied $50 \leq y_1/x \leq 650$, the overcharge deformation rate and short-circuit deformation rate of the lithium-ion battery can be further reduced, and the low-temperature rate of the lithium-ion battery can be significantly improved.

When the mass percentage of element aluminum in the positive electrode insulating layer was from 30% to 65%, the overcharge deformation rate and short-circuit deformation rate of the lithium-ion battery can be further reduced, and the low-temperature rate of the lithium-ion battery can be significantly improved.

Table 4 shows the influence of the mass percentage of element aluminum in the primer layer and the percentage of element tungsten in the positive electrode active material on the low-temperature rate performance and high-temperature and high-pressure safety of the lithium-ion battery. Except for the parameters listed in Table 4, the settings in Examples 4-1 to 4-15 were the same as those in Example 1-1.

**Table 4**

| | Percentage $y_2$ of element aluminum in primer layer (wt%) | Percentage x of element tungsten in positive electrode active material (wt%) | $y_2/x$ | Overcharge deformation rate (%) | Short-circuit deformation rate (%) | Low-temperature rate (%) |
|---|---|---|---|---|---|---|
| Example 1-1 | 0 | 0.1 | - | 20.1 | 22.3 | 67.3 |
| Example 4-1 | 20 | 0.1 | 200 | 16.3 | 13.1 | 73.1 |
| Example 4-2 | 30 | 0.1 | 300 | 16.1 | 12.2 | 73.5 |
| Example 4-3 | 40 | 0.1 | 400 | 15.8 | 11.5 | 73.9 |
| Example 4-4 | 50 | 0.1 | 500 | 15.3 | 11.3 | 74.5 |
| Example 4-5 | 55 | 0.1 | 550 | 17.1 | 15.2 | 72.1 |
| Example 4-6 | 15 | 0.1 | 150 | 17.3 | 15.7 | 72.3 |
| Example 4-7 | 20 | 0.01 | 2000 | 19.4 | 21.9 | 68.9 |
| Example 4-8 | 20 | 0.05 | 400 | 18.5 | 15.1 | 75.8 |
| Example 4-9 | 20 | 0.15 | 133 | 14.6 | 14.2 | 74.2 |
| Example 4-10 | 20 | 0.2 | 100 | 15.1 | 12.3 | 75.1 |
| Example 4-11 | 20 | 0.25 | 80 | 15.3 | 12.5 | 76.2 |
| Example 4-12 | 20 | 0.3 | 67 | 15.7 | 12.1 | 76.6 |
| Example 4-13 | 20 | 0.5 | 40 | 14.2 | 12.9 | 74.3 |
| Example 4-14 | 20 | 1 | 20 | 17.5 | 13.6 | 73.2 |
| Example 4-15 | 20 | 1.5 | 13.3 | 19.8 | 19.2 | 70.9 |

The results show that when the percentage $y_2$% of element aluminum in the positive electrode primer layer and the percentage x% of element tungsten in the positive electrode active material satisfied $20 \leq y_2/x \leq 550$, the overcharge deformation rate and short-circuit deformation rate of the lithium-ion battery can be further reduced, and the low-temperature rate of the lithium-ion battery can be significantly improved.

When the mass percentage of element aluminum in the positive electrode primer layer is from 20% to 50%, the overcharge deformation rate and short-circuit deformation rate of the lithium-ion battery can be further reduced, and the low-temperature rate of the lithium-ion battery can be significantly improved.

Table 5 shows the influence of further addition of an additional compound to the electrolyte on the low-temperature rate performance and high-temperature and high-pressure safety of the lithium-ion battery. Except for the parameters listed in Table 5, the settings in Examples 5-1 to 5-15 were the same as those in Example 1-1.

**Table 5**

| | Additional components in electrolyte | Percentage (wt%) | Overcharge deformation rate (%) | Short-circuit deformation rate (%) | Thickness swelling rate (%) |
|---|---|---|---|---|---|
| Example 1-1 | - | - | 20.1 | 22.3 | 67.3 |
| Example 5-1 | SN | 4 | 16.3 | 15.7 | 78.5 |
| Example 5-2 | SN<br>HTCN | 4<br>1 | 15.2 | 15.4 | 79.3 |
| Example 5-3 | ADN<br>HTCN | 3<br>1 | 14.8 | 14.6 | 81.5 |
| Example 5-4 | EDN<br>HTCN | 2<br>1 | 14.2 | 14.2 | 82.9 |

(continued)

| | Additional components in electrolyte | Percentage (wt%) | Overcharge deformation rate (%) | Short-circuit deformation rate (%) | Thickness swelling rate (%) |
|---|---|---|---|---|---|
| Example 5-5 | ADN<br>TCEP | 3<br>1 | 14.1 | 13.7 | 83.7 |
| Example 5-6 | SN<br>EDN<br>HTCN | 4<br>1<br>1 | 13.5 | 12.7 | 84.1 |
| Example 5-7 | HTCN<br>PS | 1<br>1 | 13.2 | 12.4 | 85.2 |
| Example 5-8 | HTCN<br>VC | 1<br>0.5 | 12.7 | 11.9 | 85.6 |
| Example 5-9 | HTCN<br>T3P | 1<br>0.5 | 12.3 | 11.6 | 86.3 |
| Example 5-10 | HTCN<br>DTD | 1<br>0.5 | 11.8 | 11.2 | 86.9 |
| Example 5-11 | HTCN<br>PS<br>T3P | 1<br>1<br>0.5 | 11.5 | 10.6 | 87.2 |
| Example 5-12 | HTCN<br>PS<br>VC | 1<br>1<br>0.5 | 11.1 | 10.5 | 87.5 |
| Example 5-13 | SN<br>PS<br>VC | 5<br>1<br>0.5 | 10.5 | 10.3 | 88.3 |
| Example 5-14 | ADN<br>PS<br>VC | 3<br>1<br>0.5 | 10.3 | 9.7 | 88.6 |
| Example 5-15 | TCEP<br>PS<br>VC | 1<br>1<br>0.5 | 9.3 | 9.1 | 89.1 |

The results show that when at least one of succinonitrile, adiponitrile, ethylene glycol di(2-cyanoethyl) ether, 1,3,6-hexanetrinitrile, 1,2,3-tris(2-cyanoethoxy)propane, 1,3-propanesultone, ethylene sulfate, vinylene carbonate, or 1-propyl phosphoric acid cyclic anhydride was added to the electrolyte already containing the dinitrile compound, the overcharge deformation rate and short-circuit deformation rate of the lithium-ion battery can be further reduced, and the low-temperature rate of the lithium-ion battery can be significantly improved.

In this specification, reference to "an embodiment", "some embodiments", "one embodiment", "another example", "an example", "a specific example", or "some examples" means that at least one embodiment or example in this application includes a specific feature, structure, material, or characteristic described in this embodiment or example. Therefore, descriptions in various places throughout this specification, such as "in some embodiments", "in the embodiments", "in an embodiment", "in another example", "in an example", "in a specific example", or "examples" do not necessarily refer to the same embodiment or example in this application. In addition, a specific feature, structure, material, or characteristic herein may be combined in any appropriate manner in one or more embodiments or examples.

Although illustrative embodiments have been demonstrated and described, those skilled in the art should

understand that the foregoing embodiments are not to be construed as limiting this application, and that some embodiments may be changed, replaced, and modified without departing from the spirit, principle, and scope of this application.

## Claims

**1.** An electrochemical apparatus comprising a positive electrode, a negative electrode, and an electrolyte, wherein the positive electrode comprises a positive electrode current collector and a positive electrode active material layer formed on the positive electrode current collector, and the positive electrode active material layer comprises a positive electrode active material, wherein the positive electrode active material comprises element tungsten, and the electrolyte comprises fluoroethylene carbonate.

**2.** The electrochemical apparatus according to claim 1, wherein

based on a mass of the positive electrode active material, a percentage of element tungsten is x%;
based on a mass of the electrolyte, a percentage of the fluoroethylene carbonate is a%; and
x and a satisfy: $1 \leq a/x \leq 70$.

**3.** The electrochemical apparatus according to claim 1, wherein based on a mass of the positive electrode active material, a percentage of element tungsten is x%, and $0.05 \leq x \leq 1$.

**4.** The electrochemical apparatus according to claim 1, wherein based on a mass of the electrolyte, a percentage of the fluoroethylene carbonate is a%, and $0.1 \leq a \leq 7$.

**5.** The electrochemical apparatus according to claim 1, wherein the electrolyte further comprises a sulfur-oxygen double bond-containing compound, and based on a mass of the electrolyte, a mass percentage of the sulfur-oxygen double bond-containing compound is b%, and $0.01 \leq b \leq 5$.

**6.** The electrochemical apparatus according to claim 5, wherein based on the mass of the positive electrode active material, a percentage of element tungsten is x%, $1 \leq b/x \leq 50$.

**7.** The electrochemical apparatus according to claim 1, wherein the positive electrode further comprises an insulating layer, and

the insulating layer is formed on the positive electrode current collector and overlaps with the positive electrode active material layer in some regions of the insulating layer, or
the insulating layer is formed on the positive electrode current collector and does not overlap with the positive electrode active material layer.

**8.** The electrochemical apparatus according to claim 7, wherein

the insulating layer comprises a compound containing element aluminum, and based on a mass of the insulating layer, a mass percentage of element aluminum is yi%;
based on a mass of the positive electrode active material, a percentage of element tungsten is x%; and
$y_1$ and x satisfy: $50 \leq y_1/x \leq 650$.

**9.** The electrochemical apparatus according to claim 8, wherein a value range of $y_1$ is from 30 to 65.

**10.** The electrochemical apparatus according to claim 1, wherein the positive electrode further comprises a primer layer, and the primer layer is formed between the positive electrode current collector and the positive electrode active material layer.

**11.** The electrochemical apparatus according to claim 10, wherein

the primer layer comprises element aluminum, and based on a mass of the primer layer, a mass percentage of element aluminum is $y_2$%;
based on a mass of the positive electrode active material, a percentage of element tungsten is x%; and
$y_2$ and x satisfy: $20 \leq y_2/x \leq 550$.

12. The electrochemical apparatus according to claim 11, wherein a value range of $y_2$ is from 20 to 50.

13. The electrochemical apparatus according to claim 1, wherein the electrolyte further comprises at least one of succinonitrile, adiponitrile, ethylene glycol di(2-cyanoethyl) ether, 1,3,6-hexanetrinitrile, 1,2,3-tris(2-cyanoethoxy) propane, 1,3-propanesultone, ethylene sulfate, vinylene carbonate, or 1-propyl phosphoric acid cyclic anhydride.

14. The electrochemical apparatus according to claim 1, wherein the positive electrode active material comprises lithium nickel cobalt manganate.

15. An electronic apparatus, comprising the electrochemical apparatus according to any one of claims 1 to 14.

**INTERNATIONAL SEARCH REPORT**

International application No.
**PCT/CN2021/142398**

**A. CLASSIFICATION OF SUBJECT MATTER**

H01M 4/36(2006.01)i; H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, CNKI, ENTXT, ENTXTC, DWPI: 电池, 正极, 活性物质, 活性材料, 钨, 氟代碳酸乙烯酯, 掺杂, battery, cell, cathode, active, material, W, FEC, tungsten, doped

**C. DOCUMENTS CONSIDERED TO BE RELEVANT**

| Category* | Citation of document, with indication, where appropriate, of the relevant passages | Relevant to claim No. |
|---|---|---|
| X | CN 111276746 A (NINGDE AMPEREX TECHNOLOGY LTD.) 12 June 2020 (2020-06-12)<br>description, paragraphs 0047-0107 | 1-6, 13-15 |
| Y | CN 111276746 A (NINGDE AMPEREX TECHNOLOGY LTD.) 12 June 2020 (2020-06-12)<br>description, paragraphs 0047-0107 | 7-12 |
| Y | CN 113764616 A (NINGDE AMPEREX TECHNOLOGY LTD.) 07 December 2021 (2021-12-07)<br>description, paragraphs 0027-0089 | 7-12 |
| A | CN 109167056 A (RUYUAN DONG YANG GUANG MAGNETIC MATERIALS CO., LTD. et al.) 08 January 2019 (2019-01-08)<br>entire document | 1-15 |
| A | US 2016056460 A1 (SANYO ELECTRIC CO., LTD.) 25 February 2016 (2016-02-25)<br>entire document | 1-15 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 April 2022** | **16 June 2022** |
| Name and mailing address of the ISA/CN<br>**China National Intellectual Property Administration (ISA/CN)**<br>**No. 6, Xitucheng Road, Jimenqiao, Haidian District, Beijing 100088, China** | Authorized officer |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/142398**

| Patent document cited in search report | Publication date (day/month/year) | Patent family member(s) | Publication date (day/month/year) |
|---|---|---|---|
| CN 111276746 A | 12 June 2020 | CN 113078362 A | 06 July 2021 |
| | | CN 111276746 B | 27 April 2021 |
| CN 113764616 A | 07 December 2021 | US 2020075943 A1 | 05 March 2020 |
| | | CN 110867585 A | 06 March 2020 |
| | | US 10950854 B2 | 16 March 2021 |
| | | CN 110867585 B | 01 October 2021 |
| | | CN 113764675 A | 07 December 2021 |
| CN 109167056 A | 08 January 2019 | CN 109167056 B | 03 August 2021 |
| US 2016056460 A1 | 25 February 2016 | WO 2014155988 A1 | 02 October 2014 |
| | | CN 105051953 A | 11 November 2015 |
| | | JP WO2014155988 A1 | 16 February 2017 |
| | | JP 6138916 B2 | 31 May 2017 |
| | | CN 105051953 B | 29 May 2018 |

Form PCT/ISA/210 (patent family annex) (January 2015)